# EUROPEAN PATENT APPLICATION

(11) **EP 4 748 766 A1**
(43) Date of publication of application: **27.05.2026**
(21) Application number: 24866833.7
(22) Date of filing: 17.04.2024
(51) Int. Cl.: B65H 35/02

(54) **CONVEYING APPARATUS AND WINDING DEVICE**

(30) Priority: 22.09.2023 CN 202311229595
(71) Applicant: Contemporary Amperex Technology Co., Limited, Ningde, Fujian 352100 (CN)
(72) Inventor: WU, Kai, Ningde, Fujian 352100 (CN); HUANG, Guoda, Ningde, Fujian 352100 (CN); XIE, Chao, Ningde, Fujian 352100 (CN); ZHOU, Chen, Ningde, Fujian 352100 (CN); HUANG, Jinghua, Ningde, Fujian 352100 (CN); WANG, Yiruo, Ningde, Fujian 352100 (CN)
(74) Representative: Kraus & Lederer PartGmbB
(86) International application number: PCT/CN2024/088375
(87) International publication number: WO 2025/060408

(57) **Abstract**

A conveying apparatus. A conveying apparatus (100) is used for conveying a plurality of electrode sheets (200) formed by cutting. The conveying apparatus (100) comprises a plurality of conveying roller sets (10) and an offset mechanism (20); each conveying roller set (10) comprises at least one conveying roller (11), and each conveying roller (11) is used for conveying one electrode sheet (200); and the offset mechanism (20) is adapted to be connected to at least one electrode sheet (200), and in the width direction of the electrode sheet (200), the offset mechanism (20) is used for offsetting two adjacent electrode sheets (200) from each other. According to the conveying apparatus, the probability of mutual friction between two electrode sheets is reduced, so that damage, scratches or pollution of the surface of an electrode sheet is reduced, thus improving the quality and performance of a produced battery cell. Further provided is a winding device comprising the conveying apparatus.

## Description

### CROSS-REFERENCE TO RELATED APPLICATIONS

The present application claims priority to and the benefit of the patent application with application number 202311229595.3 filed with the China National Intellectual Property Administration on September 22, 2023, and the entirety thereof is incorporated herein by reference.

### TECHNICAL FIELD

The present application relates to the technical field of battery manufacturing equipment, and particularly relates to a conveying apparatus and a winding device.

### BACKGROUND

In the battery manufacturing process, multiple electrode sheet material lines need to be conveyed to a winding machine, and then assembled into battery cells and other battery assemblies through a winding process. However, during the winding process of multiple electrode sheets, friction often occurs due to mutual contact between adjacent electrode sheets. This friction may cause damage, scratches, or contamination on the surface of the electrode sheets, thereby reducing the quality and performance of the produced battery cells.

### SUMMARY

The present application provides a conveying apparatus and a winding device, which can solve the problem that during the winding process of multiple electrode sheets, mutual contact and friction between adjacent electrode sheets lead to damage, scratches, or contamination on the surface of the electrode sheets, thereby reducing the quality and performance of the produced battery cells.

The conveying apparatus of the embodiments of the present application is configured to convey multiple electrode sheets formed by cutting, and the conveying apparatus includes:
multiple conveying roller groups, the conveying roller group including at least one conveying roller, and each of the conveying rollers being configured to convey one of the electrode sheets; and
an offset mechanism, the offset mechanism being configured to connect with at least one of the electrode sheets, and along a width direction of the electrode sheet, the offset mechanism being configured to offset two adjacent electrode sheets from each other.

In the conveying apparatus of the embodiments of the present application, along the width direction of the electrode sheet, the offset mechanism offsets two adjacent electrode sheets from each other, enabling the two adjacent electrode sheets to be separated from each other during the winding process, reducing the probability of mutual friction between the two electrode sheets, and reducing damage, scratches, or contamination on the surface of the electrode sheets, thereby further improving the quality and performance of the produced battery cells.

In some embodiments, two electrode sheets and two conveying roller groups are provided, the two electrode sheets are a first electrode sheet and a second electrode sheet respectively, the two conveying roller groups are a first conveying roller group and a second conveying roller group, the first conveying roller group includes at least one first conveying roller, the first conveying roller is configured to convey the first electrode sheet, the second conveying roller group includes at least one second conveying roller, and the second conveying roller is configured to convey the second electrode sheet.

The offset mechanism is configured to connect with the first electrode sheet and/or the second electrode sheet, and along a width direction of the first electrode sheet, the offset mechanism is configured to offset the first electrode sheet and the second electrode sheet from each other.

In this way, since two electrode sheets and two conveying roller groups are provided, they are used for conveying the first electrode sheet and the second electrode sheet respectively. Such a design makes the conveying processes of the first electrode sheet and the second electrode sheet independent from each other, avoiding interference and mutual influence between different electrode sheets. The offset mechanism can be configured to precisely control the offset amount of the first electrode sheet and the second electrode sheet. Such a design can ensure the consistency of the position and size of the electrode sheets, improving the assembly accuracy and consistency of the battery cells.

In some embodiments, the offset mechanism includes at least one offset roller, the offset roller is connected to the first electrode sheet and/or the second electrode sheet, and an axial direction of the offset roller forms an included angle with an axial direction of the first conveying roller and/or the second conveying roller, so as to offset the first electrode sheet and the second electrode sheet from each other along the width direction of the first electrode sheet.

In this way, the first electrode sheet and the second electrode sheet are offset from each other by forming an included angle between the axial direction of the offset roller and the axial direction of the first conveying roller and/or the second conveying roller. Such a design can achieve precise offset of the electrode sheets and control the offset amount. By adjusting the angle between the offset roller and the first conveying roller and/or the second conveying roller, the offset distance of the first electrode sheet and the second electrode sheet can be adjusted, thereby further ensuring the consistency of the position and size of the electrode sheets.

In some embodiments, the offset roller includes a first offset roller and a second offset roller, the first offset roller is connected to the first electrode sheet, an axial direction of the first offset roller forms a first included angle with the axial direction of the first conveying roller, and the first offset roller cooperates with the first conveying roller to convey the first electrode sheet.

The second offset roller is connected to the second electrode sheet, an axial direction of the second offset roller forms a second included angle with the axial direction of the second conveying roller, and the second offset roller cooperates with the second conveying roller to convey the second electrode sheet.

In this way, through the design of the first offset roller and the second offset roller, separate conveyance of the first electrode sheet and the second electrode sheet is achieved. Such a design makes the conveying processes of the first electrode sheet and the second electrode sheet independent from each other, avoiding interference and mutual influence between different electrode sheets. Further, the first offset roller and the second offset roller cooperate with the corresponding conveying roller groups for conveyance respectively, so the offset processes of the first electrode sheet and the second electrode sheet can be controlled independently. Such a design makes the offset more flexible and can adapt to production demands of electrode sheets of different sizes and types.

In some embodiments, a tilting direction of the first offset roller and a tilting direction of the second offset roller are opposite.

In this way, since the tilting direction of the first offset roller and the tilting direction of the second offset roller are opposite, the first electrode sheet and the second electrode sheet can be offset from each other in the width direction and in opposite directions. Such a design can achieve bidirectional offset, further increasing the flexibility and controllability of the offset. The distance between the first electrode sheet and the second electrode sheet is relatively large, thereby effectively reducing the probability of friction between the first electrode sheet and the second electrode sheet.

In some embodiments, multiple first conveying rollers and multiple first offset rollers are provided, and along a conveying direction of the first electrode sheet, at least one first offset roller is provided between two adjacent first conveying rollers.

In this way, since multiple first conveying rollers and multiple first offset rollers are provided, multi-point conveyance and multi-point offset of the first electrode sheet at different positions can be achieved. Such a design can more precisely control the conveyance and offset process of the first electrode sheet, further improving the accuracy and consistency of battery cell production. Disposing multiple first conveying rollers and first offset rollers can better adapt to production demands of first electrode sheets of different sizes. First electrode sheets of different sizes can be conveyed and offset at different positions, with higher flexibility.

In some embodiments, along the conveying direction of the first electrode sheet, one first offset roller is provided between two adjacent first conveying rollers; or,
along the conveying direction of the first electrode sheet, all the first offset rollers are provided between two adjacent first conveying rollers.

In this way, by providing an offset roller between two adjacent first conveying rollers, separate offset of the first electrode sheet at different positions can be achieved, ensuring the consistency of the position and size of the first electrode sheet at different positions, and improving the assembly accuracy and consistency of the battery cells; by providing all the first offset rollers between two adjacent first conveying rollers, continuous offset of the entire region of the first electrode sheet is achieved, ensuring the consistency of the position and size of the first electrode sheet in the entire width direction, and further improving the assembly accuracy and consistency of the battery cells.

In some embodiments, multiple second conveying rollers and multiple second offset rollers are provided, and along a conveying direction of the second electrode sheet, at least one second offset roller is provided between two adjacent second conveying rollers.

In this way, since multiple second conveying rollers and multiple second offset rollers are provided, multi-point conveyance and multi-point offset of the second electrode sheet at different positions can be achieved. Such a design can more precisely control the conveyance and offset process of the second electrode sheet, further improving the accuracy and consistency of battery cell production. Disposing multiple second conveying rollers and second offset rollers can better adapt to production demands of second electrode sheets of different sizes. Second electrode sheets of different sizes can be conveyed and offset at different positions, with higher flexibility.

In some embodiments, along the conveying direction of the second electrode sheet, one second offset roller is provided between two adjacent second conveying rollers; or,
along the conveying direction of the second electrode sheet, all the second offset rollers are provided between two adjacent second conveying rollers.

In this way, by providing an offset roller between two adjacent second conveying rollers, separate offset of the second electrode sheet at different positions can be achieved, ensuring the consistency of the position and size of the second electrode sheet at different positions, and improving the assembly accuracy and consistency of the battery cells; by providing all the second offset rollers between two adjacent second conveying rollers, continuous offset of the entire region of the second electrode sheet is achieved, ensuring the consistency of the position and size of the second electrode sheet in the entire width direction, and further improving the assembly accuracy and consistency of the battery cells.

In some embodiments, multiple first conveying rollers and multiple first offset rollers are provided, all the first offset rollers are at a same height, all the first conveying rollers are at a same height, and the first offset roller is higher than the first conveying roller; and/or,
multiple second conveying rollers and multiple second offset rollers are provided, all the second offset rollers are at a same height, all the second conveying rollers are at a same height, and the second offset roller is lower than the second conveying roller.

In this way, through the provision of the first conveying rollers and the first offset rollers, the first offset roller is higher than the first conveying roller. Similarly, through the provision of the second conveying rollers and the second offset rollers, the second offset roller is lower than the second conveying roller. Such a design can achieve conveyance and offset of the electrode sheets at different heights, with higher flexibility.

Further, the conveyance and offset design at different heights can precisely control the offset amount of the electrode sheets at different positions. By adjusting the heights of the first offset roller and the second offset roller separately, the consistency of the position and size of the electrode sheets is ensured, improving the assembly accuracy and consistency of the battery cells.

In some embodiments, the conveying apparatus includes a back plate and an adjustment mechanism, the adjustment mechanism and the conveying roller group are both mounted on the back plate, the offset roller is mounted on the adjustment mechanism, and the adjustment mechanism is configured to adjust the axial direction of the offset roller.

In this way, the back plate serves as the main part of the conveying apparatus, and the adjustment mechanism and the conveying roller group are both mounted on the back plate. Such a design can simplify the structure of the conveying apparatus and improve the convenience of assembly and maintenance. The offset roller mounted on the adjustment mechanism allows the adjustment mechanism to more precisely adjust the position and axial direction of the offset roller, thereby achieving more precise offset of the electrode sheets.

In some embodiments, the adjustment mechanism includes a mounting seat and a rotating shaft, the mounting seat is fixed on the back plate, the rotating shaft is rotatably disposed on the mounting seat, the offset roller is fixedly connected to the rotating shaft, the offset roller can swing relative to the mounting seat through the rotating shaft, and the axial direction of the offset roller is substantially perpendicular to an axial direction of the rotating shaft.

In this way, through the combination of the rotating shaft and the mounting seat, the offset roller can swing relative to the mounting seat. Such a design makes the offset adjustment of the offset roller more flexible. The mounting seat fixed on the back plate provides a stable support structure, which helps to ensure the stability and reliability of the adjustment mechanism and the offset roller. The axial direction of the offset roller being substantially perpendicular to the axial direction of the rotating shaft enables the offset roller to swing in the vertical direction. Such a design can achieve vertical offset of the electrode sheets, ensuring the consistency of the position and size of the electrode sheets, and improving the assembly accuracy and consistency of the battery cells.

In some embodiments, the adjustment mechanism includes an adjustment assembly mounted on the mounting seat, and the adjustment assembly is connected to the offset roller and configured to adjust a swing angle of the offset roller relative to the mounting seat.

In this way, the adjustment assembly mounted on the mounting seat provides a stable support structure, which helps to ensure the stability and reliability of the adjustment mechanism and the offset roller. By connecting the adjustment assembly with the offset roller, the swing angle of the offset roller relative to the mounting seat can be adjusted.

In some embodiments, the adjustment assembly includes a first adjustment member and a second adjustment member, both the first adjustment member and the second adjustment member are mounted on the mounting seat and abut against the offset roller, and both the first adjustment member and the second adjustment member drive the offset roller to swing relative to the mounting seat during the rotation relative to the mounting seat.

In this way, both the first adjustment member and the second adjustment member are mounted on the mounting seat and abut against the offset roller, providing a stable support structure, which helps to ensure the stability and reliability of the adjustment mechanism and the offset roller. Through the combination of the first adjustment member and the second adjustment member, precise adjustment of the swing angle of the offset roller relative to the mounting seat can be achieved. The first adjustment member provides rough adjustment, while the second adjustment member provides finer adjustment, making the offset angle adjustment of the offset roller more precise.

In some embodiments, the adjustment mechanism further includes an indication member connected to the rotating shaft, and the indication member is configured to indicate the swing angle of the offset roller.

In this way, the indication member provides intuitive angle indication, which helps to provide real-time feedback on the swing angle of the offset roller, thereby intuitively reflecting the offset situation of the offset roller relative to the mounting seat, and helping to precisely adjust the swing angle of the offset roller.

In some embodiments, the indication member includes a pointer, a scale is provided on the mounting seat, and the pointer points to the scale to indicate the swing angle of the offset roller.

In this way, through the combination of the pointer and the scale, the swing angle of the offset roller can be intuitively reflected without complicated measurement, which is easier to operate, thereby reducing debugging time and improving operation efficiency. In addition, the pointer pointing to the scale provides specific angle values, and the swing angle of the offset roller can be accurately adjusted, thereby achieving precise offset of the electrode sheets.

In some embodiments, the first conveying roller group and the second conveying roller group are symmetrically arranged with respect to a conveying direction of the electrode sheet.

In this way, due to the symmetrical arrangement of the first conveying roller group and the second conveying roller group, the force distribution on the electrode sheet during the conveying process is more uniform, reducing friction and squeezing between the electrode sheets, which helps to reduce damage and contamination on the surface of the electrode sheets, and improve the quality and performance of the battery cells.

In some embodiments, the conveying apparatus includes a cutting assembly, and the cutting assembly is provided upstream of the conveying roller group and configured to cut an original electrode sheet to form the multiple electrode sheets.

In this way, through the automatic cutting function of the cutting assembly, the original electrode sheet can be quickly cut into multiple electrode sheets, improving production efficiency and yield. The cutting assembly can achieve precise cutting operations, ensuring consistent size of each cut electrode sheet, and guaranteeing the consistency and stability of the battery.

The winding device of the embodiments of the present application includes the conveying apparatus as described in any one of the above embodiments.

In this way, through the above conveying apparatus, the winding device has multiple different functions and features, and the winding device can achieve different operations such as conveyance, segmentation, and offset of the electrode sheets. The winding device can achieve automated conveyance and segmentation of the electrode sheets, thereby improving production efficiency and reducing production costs. Through the functions of the winding device, precise processing and assembly of the electrode sheets are facilitated, which helps to optimize the quality and performance of the battery cells.

Additional aspects and advantages of the present application will be set forth in part in the following description, and become apparent in part from the following description, or be learned through practice of the present application.

### BRIEF DESCRIPTION OF THE DRAWINGS

The above and/or additional aspects and advantages of the present application will become apparent and easily understood from the description of embodiments in conjunction with the following drawings, in which:
FIG. 1 is a schematic structural diagram of a conveying apparatus according to an embodiment of the present application;
FIG. 2 is a schematic structural diagram of a conveying apparatus according to an embodiment of the present application;
FIG. 3 is a schematic structural diagram of a conveying apparatus according to an embodiment of the present application;
FIG. 4 is a schematic structural diagram of a conveying apparatus according to an embodiment of the present application;
FIG. 5 is a schematic diagram of an assembly structure of an adjustment mechanism and an offset roller according to an embodiment of the present application;
FIG. 6 is a schematic diagram of an assembly structure of an adjustment mechanism and an offset roller according to an embodiment of the present application;
FIG. 7 is a schematic diagram of an assembly structure of an adjustment mechanism and an offset roller according to an embodiment of the present application;
FIG. 8 is a cross-sectional view taken along a-a direction of an assembly structure of FIG. 7;
FIG. 9 is a schematic structural diagram of an adjustment mechanism according to an embodiment of the present application;
FIG. 10 is a simplified structural diagram of a winding device according to an embodiment of the present application; and
FIG. 11 is a schematic diagram of an assembly structure of a winding needle and a support structure according to an embodiment of the present application.

Description of reference numerals in the drawings:
conveying apparatus 100; electrode sheet 200; conveying roller group 10; conveying roller 11; offset mechanism 20; first electrode sheet 201; second electrode sheet 202; first conveying roller group 12; second conveying roller group 13; first conveying roller 120; second conveying roller 130; offset roller 21; first offset roller 210; second offset roller 211; back plate 30; adjustment mechanism 40; mounting seat 41; rotating shaft 42; adjustment assembly 43; first adjustment member 430; second adjustment member 431; indication member 44; support seat 45; body 450; support frame 451; pointer 440; scale 410; cutting assembly 50; winding device 1000; winding needle 300; and support structure 310.

### DETAILED DESCRIPTION

The embodiments of the present application are described in detail below, examples of which are illustrated in the accompanying drawings, where like or similar reference numerals designate like or similar elements or elements having the same or similar functions throughout. The embodiments described below with reference to the drawings are exemplary and are only used to explain the present application, and should not be construed as limiting the present application.

In the description of the present application, it should be understood that the orientation or positional relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", or the like is based on the orientation or positional relationship shown in the drawings, and is only for the convenience of describing the present application and simplifying the description, rather than indicating or implying that the referred means or element must have a specific orientation, be constructed and operated in a specific orientation, and therefore should not be construed as limiting the present application. In addition, the terms "first" and "second" are used for descriptive purposes only, and should not be construed as indicating or implying relative importance or implicitly indicating the number of technical features indicated. Thus, features defined as "first" and "second" may explicitly or implicitly include one or more of the features. In the description of the present application, the meaning of "multiple" is two or more unless otherwise specifically defined and limited.

In the description of the present application, it should be noted that, unless otherwise specifically defined and limited, the terms "mounting", "join", "connecting" should be understood in a broad sense. For example, they can be a fixed connection, a detachable connection, or an integral connection; they can be a mechanical connection, an electrical connection, or mutual communication; or they can be a direct connection, or an indirect connection through an intermediary, or internal communication between two elements or interaction relationship between two elements. For those of ordinary skill in the art, the specific meanings of the above terms in the present application can be understood according to specific situations.

In the present application, unless otherwise specifically defined and limited, a first feature being "above" or "below" a second feature may include direct contact between the first and second features, or may include indirect contact between the first and second features through other features therebetween. Moreover, a first feature being "above", "over", and "on top of" a second feature includes the first feature being directly above and obliquely above the second feature, or merely indicating that the first feature is horizontally higher than the second feature. A first feature being "below", "under" and "beneath" a second feature includes the first feature being directly below and obliquely below the second feature, or merely indicating that the first feature is horizontally lower than the second feature.

The following disclosure provides many different embodiments or examples for implementing different structures of the present application. To simplify the disclosure of the present application, components and arrangements of specific examples are described below. Certainly, they are merely examples and are not intended to limit the present application. In addition, the present application may repeat reference numerals and/or reference letters in different examples. Such repetition is for the purpose of simplicity and clarity, and does not itself indicate any relationship between the various embodiments and/or arrangements discussed. Furthermore, the present application provides examples of various specific processes and materials, but one of ordinary skill in the art can recognize the application of other processes and/or the use of other materials.

At present, from the development of the market situation, the application of traction batteries is becoming more and more widespread. Traction batteries are not only applied to energy storage power systems such as hydraulic, thermal, wind and solar power stations, but also widely applied to electric vehicles such as electric bicycles, electric motorcycles, electric vehicles, and multiple fields such as aerospace. With the continuous expansion of the application fields of traction batteries, the market demand is also continuously increasing.

The types of currently common rechargeable batteries include: lead-acid batteries, nickel-metal hydride batteries, and lithium-ion batteries. The battery mentioned in the examples disclosed in the present application refers to a single physical module that includes one or more battery cells to provide a predetermined voltage and capacity. The battery cell is the basic unit in the battery, and generally can be divided into: cylindrical battery cells, prismatic battery cells, and pouch battery cells according to the packaging method.

The battery cell includes a positive electrode sheet, a negative electrode sheet, an electrolyte, and a separator. The lithium-ion battery cell mainly works by relying on the movement of lithium ions between the positive electrode sheet and the negative electrode sheet. In the cylindrical battery cell, the thin film structure of three layers of materials is wound into a cylindrical electrode assembly, while in the prismatic battery cell, the thin film structure is wound or stacked into an electrode assembly having a substantially prismatic shape.

In some scenarios, the electrode sheets of the battery cell need to be wound to form a preset shape. During the transportation of the electrode sheets before winding, the electrode sheets are prone to mutual contact, thereby generating friction. This friction may cause damage, scratches, or contamination on the surface of the electrode sheets, thereby reducing the quality and performance of the produced battery cells.

Therefore, in order to solve the problem that during the winding process of multiple electrode sheets, mutual contact and friction between adjacent electrode sheets lead to damage, scratches, or contamination on the surface of the electrode sheets, thereby reducing the quality and performance of the produced battery cells, the embodiments of the present application provide a conveying apparatus and a winding device.

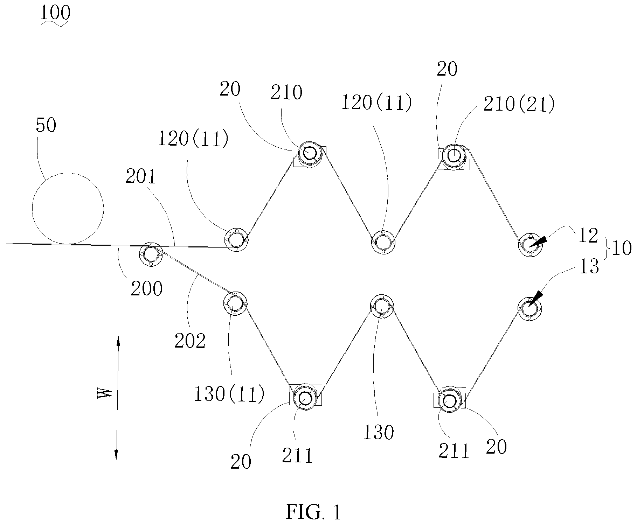

Referring to FIG. 1, FIG. 1 is a schematic structural diagram of a conveying apparatus 100 according to an embodiment of the present application. The conveying apparatus 100 of the embodiments of the present application is configured to convey multiple electrode sheets 200 formed by cutting, and the conveying apparatus 100 includes multiple conveying roller groups 10 and an offset mechanism 20. The conveying roller group 10 includes at least one conveying roller 11, each conveying roller 11 being configured to convey one electrode sheet 200; the offset mechanism 20 is configured to connect with at least one electrode sheet 200, and along a width direction W of the electrode sheet 200, the offset mechanism 20 is configured to offset two adjacent electrode sheets 200 from each other.

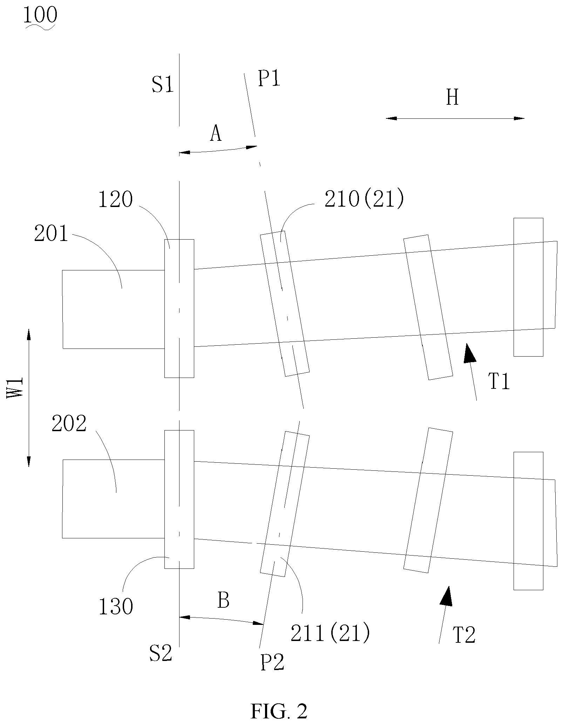

Specifically, the number of the electrode sheets 200 can be two, three, four or even more, and the widths, lengths, and the like of the multiple electrode sheets 200 can be the same or different. The number of the conveying roller groups 10 can be two, three, four or even more, the conveying roller group 10 can include one or more conveying rollers 11, and the conveying roller 11 can be a roller used for conveying the electrode sheet 200 in a predetermined direction, where the predetermined direction is the conveying direction H of the electrode sheet 200 (as shown in FIG. 2). The electrode sheet 200 can contact the surface of the conveying roller 11, and through the rotation of the conveying roller 11, the conveyance of the electrode sheet 200 is achieved.

The offset mechanism 20 can be provided after the conveying roller 11, the multiple electrode sheets 200 delivered from the conveying roller 11 are further connected to the offset mechanism 20, and by adjusting parameters such as angles and distances between various parts of the offset mechanism 20, the multiple electrode sheets 200 are offset from each other. Specifically, two adjacent electrode sheets 200 along the width direction W of the electrode sheet 200 are offset from each other. The width direction W of the electrode sheet 200 refers to the width direction in which the multiple electrode sheets 200 are arranged.

It can be understood that during the conveyance by the conveying roller 11, the multiple electrode sheets 200 can be arranged at intervals along the overall width direction. After the multiple electrode sheets 200 are conveyed to the offset mechanism 20, two adjacent electrode sheets 200 are offset in the width direction W of the electrode sheet 200 under the guidance of the offset mechanism 20, thereby reducing the probability of friction between two adjacent electrode sheets 200.

In the conveying apparatus 100 of the embodiments of the present application, along the width direction W of the electrode sheet 200, the offset mechanism 20 offsets two adjacent electrode sheets 200 from each other, enabling the two adjacent electrode sheets 200 to be separated from each other during the winding process, reducing the probability of mutual friction between the two electrode sheets 200, and reducing damage, scratches, or contamination on the surface of the electrode sheet 200, thereby further improving the quality and performance of the produced battery cells.

Referring to FIG. 1 and FIG. 2, FIG. 2 is a schematic structural diagram of a conveying apparatus 100 according to an embodiment of the present application. In some embodiments, two electrode sheets 200 and two conveying roller groups 10 are provided, the two electrode sheets 200 are a first electrode sheet 201 and a second electrode sheet 202 respectively, the two conveying roller groups 10 are a first conveying roller group 12 and a second conveying roller group 13, the first conveying roller group 12 includes at least one first conveying roller 120, the first conveying roller 120 is configured to convey the first electrode sheet 201, the second conveying roller group 13 includes at least one second conveying roller 130, and the second conveying roller 130 is configured to convey the second electrode sheet 202.

The offset mechanism 20 is configured to connect with the first electrode sheet 201 and/or the second electrode sheet 202, and along a width direction W1 of the first electrode sheet 201, the offset mechanism 20 is configured to offset the first electrode sheet 201 and the second electrode sheet 202 from each other.

Specifically, the first conveying roller group 12 and the second conveying roller group 13 can have a certain distance therebetween, so that the first electrode sheet 201 and the second electrode sheet 202 have a certain distance when the conveying roller group 10 starts to convey them. The width direction W1 of the first electrode sheet 201 can be the same as the width direction W of the electrode sheet 200, and the width direction W1 of the first electrode sheet 201 refers to the extension direction of the width of the first electrode sheet 201 at the position, of the first electrode sheet 201, where the first electrode sheet 201 contacts the first conveying roller 120. The width direction of the second electrode sheet 202 is similar thereto, which will not be repeated here.

The offset mechanism 20 can be connected to the first electrode sheet 201, or can be connected to the second electrode sheet 202, or can be connected to the first electrode sheet 201 and the second electrode sheet 202 simultaneously. The offset mechanism 20 can be an offset rod, an offset guide rail, an offset roller 21, or the like. The offset mechanism 20 can include multiple parts, and each part can offset the conveying direction of the first electrode sheet 201 or the second electrode sheet 202 respectively.

For example, at the initial position, the first electrode sheet 201 and the second electrode sheet 202 are conveyed in the same conveying direction, and when the first electrode sheet 201 is conveyed to the offset mechanism 20, the offset mechanism 20 cannot change the conveying direction of the first electrode sheet 201, while when the second electrode sheet 202 is conveyed to the offset mechanism 20, the offset mechanism 20 can change the conveying direction of the second electrode sheet 202, thereby offsetting the first electrode sheet 201 and the second electrode sheet 202 from each other along the width direction W1 of the first electrode sheet 201.

In some embodiments, the offset mechanism 20 can be an offset rod, the offset rod can be fixed on one side of the first electrode sheet 201 and/or the second electrode sheet 202 through bolts or nuts, and by adjusting the length and angle of the offset rod, a certain force is applied to the first electrode sheet 201 and/or the second electrode sheet 202, thereby achieving offset.

In some embodiments, the offset mechanism 20 can fix the offset guide rail on the conveying apparatus 100, and corresponding sliders or guide means are provided on the first electrode sheet 201 and/or the second electrode sheet 202. By adjusting the position of the offset guide rail, the first electrode sheet 201 and/or the second electrode sheet 202 are offset along the guide rail.

In this way, since two electrode sheets 200 and two conveying roller groups 10 are provided, they are used for conveying the first electrode sheet 201 and the second electrode sheet 202 respectively. Such a design makes the conveying processes of the first electrode sheet 201 and the second electrode sheet 202 independent from each other, avoiding interference and mutual influence between different electrode sheets 200. The offset mechanism 20 can be configured to precisely control the offset amount of the first electrode sheet 201 and the second electrode sheet 202. Such a design can ensure the consistency of the position and size of the electrode sheets 200.

Referring to FIG. 1 and FIG. 2, in some embodiments, the offset mechanism 20 includes at least one offset roller 21, the offset roller 21 is connected to the first electrode sheet 201 and/or the second electrode sheet 202, and the axial direction of the offset roller 21 forms an included angle with the axial direction of the first conveying roller 120 and/or the second conveying roller 130, so as to offset the first electrode sheet 201 and the second electrode sheet 202 from each other along the width direction W1 of the first electrode sheet 201.

In some embodiments, the offset roller 21 is connected to the first electrode sheet 201. In some embodiments, the offset roller 21 is connected to the second electrode sheet 202. In some embodiments, the offset roller 21 is connected to the first electrode sheet 201 and the second electrode sheet 202. In some embodiments, the axial direction of the offset roller 21 forms an included angle with the axial direction of the first conveying roller 120. In some embodiments, the axial direction of the offset roller 21 forms an included angle with the axial direction of the second conveying roller 130. In some embodiments, the axial direction of the offset roller 21 forms included angles with the axial directions of the first conveying roller 120 and the second conveying roller 130.

Specifically, the offset roller 21 can be a roller used for offsetting the first electrode sheet 201 and/or the second electrode sheet 202, and both the offset roller 21 and the conveying roller 11 can be made of wear-resistant materials, thereby prolonging their service life. The first electrode sheet 201 and/or the second electrode sheet 202 contacts the surface of the offset roller 21, and during the rotation of the offset roller 21, the first electrode sheet 201 and/or the second electrode sheet 202 can move toward different directions, where the moving direction can be adjusted according to the position of the offset roller 21.

The number of the offset rollers 21 can be one, two, three or even more. In some embodiments, the offset mechanism 20 is composed of a single offset roller 21, and the offset roller 21 is connected to the first electrode sheet 201 and/or the second electrode sheet 202. By adjusting the position of the offset roller 21, the first electrode sheet 201 and the second electrode sheet 202 are offset from each other under the action of the conveying roller 11, ensuring the gap between the electrode sheets 200.

In some embodiments, the offset mechanism 20 is composed of multiple offset rollers 21, which are connected to the first electrode sheet 201 and the second electrode sheet 202 respectively. The multiple offset rollers 21 are arranged along the width direction of the first conveying roller 120 and/or the second conveying roller 130, and by adjusting the position and included angle of each offset roller 21, the offset of the multiple electrode sheets 200 is achieved.

In this way, the first electrode sheet 201 and the second electrode sheet 202 are offset from each other by forming an included angle between the axial direction of the offset roller 21 and the axial direction of the first conveying roller 120 and/or the second conveying roller 130. Such a design can achieve precise offset of the electrode sheets 200 and control the offset amount. By adjusting the angle between the offset roller 21 and the first conveying roller 120 and/or the second conveying roller 130, the offset distance of the first electrode sheet 201 and the second electrode sheet 202 can be adjusted, thereby further ensuring the consistency of the position and size of the electrode sheets 200.

Referring to FIG. 2, in some embodiments, the offset roller 21 includes a first offset roller 210 and a second offset roller 211, the first offset roller 210 is connected to the first electrode sheet 201, the axial direction of the first offset roller 210 forms a first included angle A with the axial direction of the first conveying roller 120, and the first offset roller 210 cooperates with the first conveying roller 120 to convey the first electrode sheet 201.

The second offset roller 211 is connected to the second electrode sheet 202, the axial direction of the second offset roller 211 forms a second included angle B with the axial direction of the second conveying roller 130, and the second offset roller 211 cooperates with the second conveying roller 130 to convey the second electrode sheet 202.

Specifically, the first offset roller 210 and the second offset roller 211 are different offset rollers 21. After the first electrode sheet 201 and the second electrode sheet 202 are conveyed to the first offset roller 210 and the second offset roller 211 respectively by the first conveying roller 120 and the second conveying roller 130, the first electrode sheet 201 and the second electrode sheet 202 are offset toward different angles under the action of the first offset roller 210 and the second offset roller 211, thereby achieving conveyance and offset of the first electrode sheet 201 and the second electrode sheet 202.

The axial direction of the first offset roller 210 can be the extension direction of the axis P1 of the first offset roller 210, and the axial direction of the first conveying roller 120 can be the extension direction of the axis S1 of the first conveying roller 120; the axial direction of the second offset roller 211 can be the extension direction of the axis P2 of the second offset roller 211, and the axial direction of the second conveying roller 130 can be the extension direction of the axis S2 of the second conveying roller 130.

The first included angle A and the second included angle B can be adjusted as needed, specifically, by adjusting the included angle between the axial direction of the first offset roller 210 and the axial direction of the first conveying roller 120, or by adjusting the included angle between the axial direction of the second offset roller 211 and the axial direction of the second conveying roller 130, thereby controlling the offset degree of the first electrode sheet 201 or the second electrode sheet 202.

In this way, through the design of the first offset roller 210 and the second offset roller 211, separate conveyance of the first electrode sheet 201 and the second electrode sheet 202 is achieved. Such a design makes the conveying processes of the first electrode sheet 201 and the second electrode sheet 202 independent from each other, avoiding interference and mutual influence between different electrode sheets 200. Further, the first offset roller 210 and the second offset roller 211 cooperate with the corresponding conveying roller groups 10 for conveyance respectively, so the offset processes of the first electrode sheet 201 and the second electrode sheet 202 can be controlled independently. Such a design makes the offset more flexible and can adapt to production demands of electrode sheets 200 of different sizes and types.

Referring to FIG. 2, in some embodiments, a tilting direction T1 of the first offset roller 210 and a tilting direction T2 of the second offset roller 211 are opposite.

Specifically, the tilting direction T1 of the first offset roller 210 can be the tilting direction of the first offset roller 210 relative to its axis P1, which is used for control of the offset angle of the offset roller 21. The tilting direction T2 of the second offset roller 211 can be the tilting direction of the second offset roller 211 relative to its axis P2, which is used for control of the offset angle of the offset roller 21. The tilting direction T1 of the first offset roller 210 and the tilting direction T2 of the second offset roller 211 can be opposite, for example, one tilts to the upper left, and the other tilts to the upper right.

In this way, since the tilting direction T1 of the first offset roller 210 and the tilting direction T2 of the second offset roller 211 are opposite, the first electrode sheet 201 and the second electrode sheet 202 can be offset from each other in the width direction W of the electrode sheet 200 and in opposite directions. Such a design can achieve bidirectional offset, further increasing the flexibility and controllability of the offset. The distance between the first electrode sheet 201 and the second electrode sheet 202 is relatively large, thereby effectively reducing the probability of friction between the first electrode sheet 201 and the second electrode sheet 202.

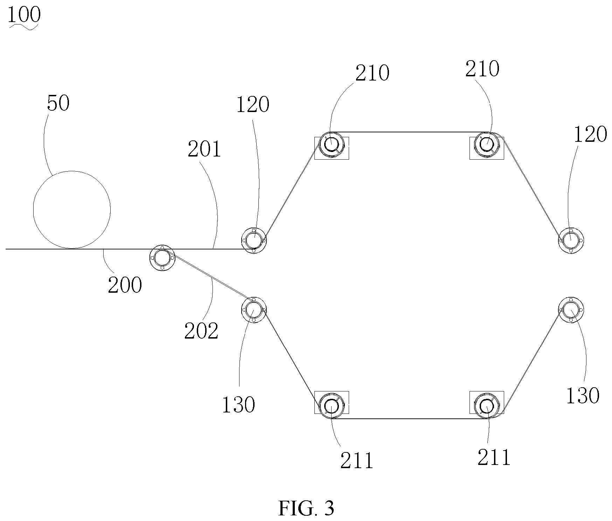

Referring to FIG. 1 and FIG. 3, FIG. 3 is a schematic structural diagram of a conveying apparatus 100 according to an embodiment of the present application. In some embodiments, multiple first conveying rollers 120 and multiple first offset rollers 210 are provided, and along a conveying direction of the first electrode sheet 201, at least one first offset roller 210 is provided between two adjacent first conveying rollers 120.

Specifically, the provision direction of the multiple first conveying rollers 120 and the multiple first offset rollers 210 can be consistent with the conveying direction of the first electrode sheet 201. Between two adjacent first conveying rollers 120, the first offset roller 210 can be provided offset from the arrangement direction of the two adjacent first conveying rollers 120, the number of the first offset rollers 210 can be one, two, three or even more, and these first offset rollers 210 can all offset the first electrode sheet 201 connected thereto.

In this way, since multiple first conveying rollers 120 and multiple first offset rollers 210 are provided, multi-point conveyance and multi-point offset of the first electrode sheet 201 at different positions can be achieved. Such a design can more precisely control the conveyance and offset process of the first electrode sheet 201, further improving the accuracy and consistency of battery cell production. Disposing multiple first conveying rollers 120 and first offset rollers 210 can better adapt to production demands of first electrode sheets 201 of different sizes. First electrode sheets 201 of different sizes can be conveyed and offset at different positions, with higher flexibility.

In addition, the multi-point conveyance and multi-point offset design can complete the conveyance and offset process of the first electrode sheet 201 faster, which helps to improve the efficiency of battery cell production. At the same time, the friction influence between the first electrode sheet 201 and the second electrode sheet 202 is reduced, reducing the loss and scrap rate in battery cell production, and further improving production efficiency.

Referring to FIG. 1 and FIG. 3, FIG. 3 is a schematic structural diagram of a conveying apparatus 100 according to an embodiment of the present application. In some embodiments, along the conveying direction of the first electrode sheet 201, one first offset roller 210 is provided between two adjacent first conveying rollers 120; or,
along the conveying direction of the first electrode sheet 201, all the first offset rollers 210 are provided between two adjacent first conveying rollers 120.

Specifically, during the conveying process of the first electrode sheet 201, the first conveying rollers 120 and the first offset rollers 210 can be arranged in sequence, and one first offset roller 210 can be provided between two adjacent first conveying rollers 120. When the first electrode sheet 201 passes through these two conveying rollers 11 and one offset roller 21, the first offset roller 210 applies an offset action, causing the first electrode sheet 201 to offset relative to the first conveying roller 120 accordingly.

All the first offset rollers 210 are provided between two adjacent first conveying rollers 120, forming a continuous offset structure. When the first electrode sheet 201 passes through these provided offset rollers 21, they continuously apply offset action, causing the first electrode sheet 201 to undergo continuous offset relative to the first conveying roller 120 throughout the conveying process.

In this way, by providing an offset roller 21 between two adjacent first conveying rollers 120, separate offset of the first electrode sheet 201 at different positions can be achieved, ensuring the consistency of the position and size of the first electrode sheet 201 at different positions, and improving the assembly accuracy and consistency of the battery cells; by providing all the first offset rollers 210 between two adjacent first conveying rollers 120, continuous offset of the entire region of the first electrode sheet 201 is achieved, ensuring the consistency of the position and size of the first electrode sheet 201 in the entire width direction, and further improving the assembly accuracy and consistency of the battery cells.

Referring to FIG. 1 and FIG. 3, in some embodiments, multiple second conveying rollers 130 and multiple second offset rollers 211 are provided, and along a conveying direction of the second electrode sheet 202, at least one second offset roller 211 is provided between two adjacent second conveying rollers 130.

Specifically, the principle of conveyance and offset of the second electrode sheet 202 by the second conveying roller 130 and the second offset roller 211 is similar to that of the first electrode sheet 201 described above, and therefore will not be repeated in the embodiment of the present application.

In this way, since multiple second conveying rollers 130 and multiple second offset rollers 211 are provided, multi-point conveyance and multi-point offset of the second electrode sheet 202 at different positions can be achieved. Such a design can more precisely control the conveyance and offset process of the second electrode sheet 202, further improving the accuracy and consistency of battery cell production. Disposing multiple second conveying rollers 130 and second offset rollers 211 can better adapt to production demands of second electrode sheets 202 of different sizes. Second electrode sheets 202 of different sizes can be conveyed and offset at different positions, with higher flexibility.

Referring to FIG. 1 and FIG. 3, in some embodiments, along the conveying direction of the second electrode sheet 202, one second offset roller 211 is provided between two adjacent second conveying rollers 130; or,
along the conveying direction of the second electrode sheet 202, all the second offset rollers 211 are provided between two adjacent second conveying rollers 130.

Specifically, the provision form of the second conveying roller 130 and the second offset roller 211 is similar to that of the first conveying roller 120 and the first offset roller 210 described above, and therefore will not be repeated in the embodiment of the present application.

In this way, by providing an offset roller 21 between two adjacent second conveying rollers 130, separate offset of the second electrode sheet 202 at different positions can be achieved, ensuring the consistency of the position and size of the second electrode sheet 202 at different positions, and improving the assembly accuracy and consistency of the battery cells; by providing all the second offset rollers 211 between two adjacent second conveying rollers 130, continuous offset of the entire region of the second electrode sheet 202 is achieved, ensuring the consistency of the position and size of the second electrode sheet 202 in the entire width direction, and further improving the assembly accuracy and consistency of the battery cells.

Referring to FIG. 1 and FIG. 3, in some embodiments, multiple first conveying rollers 120 and multiple first offset rollers 210 are provided, all the first offset rollers 210 are at a same height, all the first conveying rollers 120 are at a same height, and the first offset roller 210 is higher than the first conveying roller 120; and/or,
multiple second conveying rollers 130 and multiple second offset rollers 211 are provided, all the second offset rollers 211 are at a same height, all the second conveying rollers 130 are at a same height, and the second offset roller 211 is lower than the second conveying roller 130.

In some embodiments, multiple first conveying rollers 120 and multiple first offset rollers 210 are provided, all the first offset rollers 210 are at the same height, all the first conveying rollers 120 are at the same height, and the first offset roller 210 is higher than the first conveying roller 120.

In some embodiments, multiple second conveying rollers 130 and multiple second offset rollers 211 are provided, all the second offset rollers 211 are at the same height, all the second conveying rollers 130 are at the same height, and the second offset roller 211 is lower than the second conveying roller 130.

In some embodiments, multiple first conveying rollers 120 and multiple first offset rollers 210 are provided, all the first offset rollers 210 are at the same height, all the first conveying rollers 120 are at the same height, and the first offset roller 210 is higher than the first conveying roller 120; and multiple second conveying rollers 130 and multiple second offset rollers 211 are provided, all the second offset rollers 211 are at the same height, all the second conveying rollers 130 are at the same height, and the second offset roller 211 is lower than the second conveying roller 130.

Specifically, the multiple first offset rollers 210 can all be provided on the same horizontal line, maintaining a horizontal arrangement. The multiple first conveying rollers 120 can all be provided on the same horizontal line, maintaining a horizontal arrangement. The first offset roller 210 is positioned higher than the first conveying roller 120, forming a certain distance to ensure the offset action of the first offset roller 210 on the first electrode sheet 201.

Similarly, the multiple second offset rollers 211 can all be provided on the same horizontal line, maintaining a horizontal arrangement. The multiple second conveying rollers 130 can all be provided on the same horizontal line, maintaining a horizontal arrangement. The second offset roller 211 is positioned lower than the second conveying roller 130, forming a certain distance to ensure the offset action of the second offset roller 211 on the second electrode sheet 202. Moreover, this can avoid interference between the first offset roller 210 and the first offset roller 210, thereby effectively reducing the probability of friction between the first electrode sheet 201 and the second electrode sheet 202.

In this way, through the provision of the first conveying rollers 120 and the first offset rollers 210, the first offset roller 210 is higher than the first conveying roller 120. Similarly, through the provision of the second conveying rollers 130 and the second offset rollers 211, the second offset roller 211 is lower than the second conveying roller 130. Such a design can achieve conveyance and offset of the electrode sheets 200 at different heights, with higher flexibility.

Further, the conveyance and offset design at different heights can precisely control the offset amount of the electrode sheets 200 at different positions. By adjusting the heights of the first offset roller 210 and the second offset roller 211 separately, the consistency of the position and size of the electrode sheets 200 is ensured, improving the assembly accuracy and consistency of the battery cells.

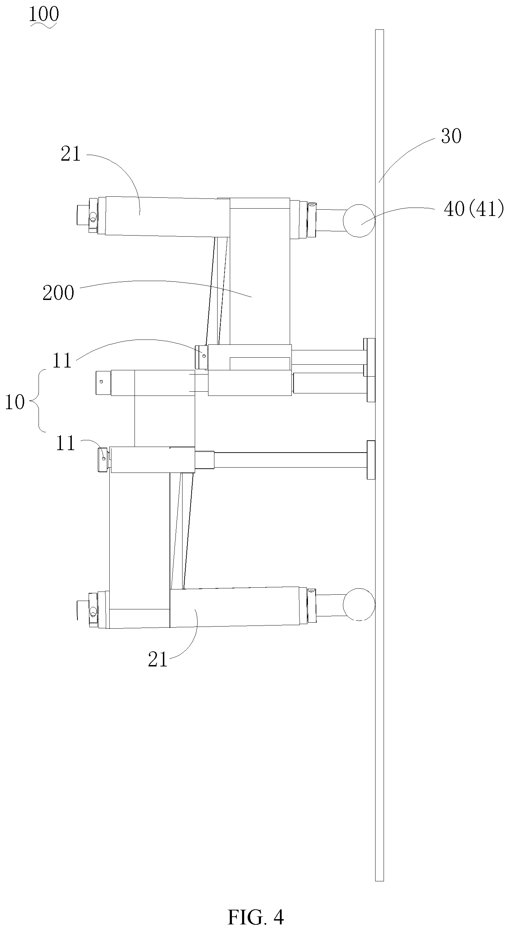

Referring to FIG. 4, FIG. 4 is a schematic structural diagram of a conveying apparatus 100 according to an embodiment of the present application. In some embodiments, the conveying apparatus 100 includes a back plate 30 and an adjustment mechanism 40, the adjustment mechanism 40 and the conveying roller group 10 are both mounted on the back plate 30, the offset roller 21 is mounted on the adjustment mechanism 40, and the adjustment mechanism 40 is configured to adjust the axial direction of the offset roller 21.

Specifically, the back plate 30 can be a sturdy planar structure, which can be made of metal or alloy material to ensure sufficient stability and strength, to bear the weight of the adjustment mechanism 40 and the conveying roller group 10, and resist the stress and pressure during operation. The back plate 30 is the main support structure 310 of the conveying apparatus 100, and can be used for mounting the adjustment mechanism 40 and the conveying roller group 10, providing a stable support platform.

The adjustment mechanism 40 is an important component for achieving axial adjustment of the offset roller 21, which can be composed of gears, screws or other mechanisms, the adjustment mechanism 40 can make the offset roller 21 swing or rotate, and the adjustment mechanism 40 can change the position and angle of the offset roller 21, thereby controlling the offset degree of the electrode sheet 200.

The offset roller 21 is mounted on the adjustment mechanism 40, and through the axial adjustment of the adjustment mechanism 40, the first electrode sheets 201 can be offset from each other along the width direction W1 of the first electrode sheet 201, or the second electrode sheets 202 can be offset from each other along the width direction W1 of the first electrode sheet 201, or the first electrode sheet 201 and the second electrode sheet 202 can be offset from each other along the width direction W1 of the first electrode sheet 201.

The adjustment mechanism 40 and the conveying roller group 10 can be mounted on the back plate 30 through bolts, welding or other fastening means. These fixing methods can ensure that the adjustment mechanism 40 and the conveying roller group 10 do not loosen or move during the working process. Similarly, the offset roller 21 can also be mounted on the adjustment mechanism 40 through bolts, welding or other fastening means.

In this way, the back plate 30 serves as the main part of the conveying apparatus 100, and the adjustment mechanism 40 and the conveying roller group 10 are both mounted on the back plate 30. Such a design can simplify the structure of the conveying apparatus 100 and improve the convenience of assembly and maintenance. The offset roller 21 mounted on the adjustment mechanism 40 allows the adjustment mechanism 40 to more precisely adjust the position and axial direction of the offset roller 21, thereby achieving more precise offset of the electrode sheets 200.

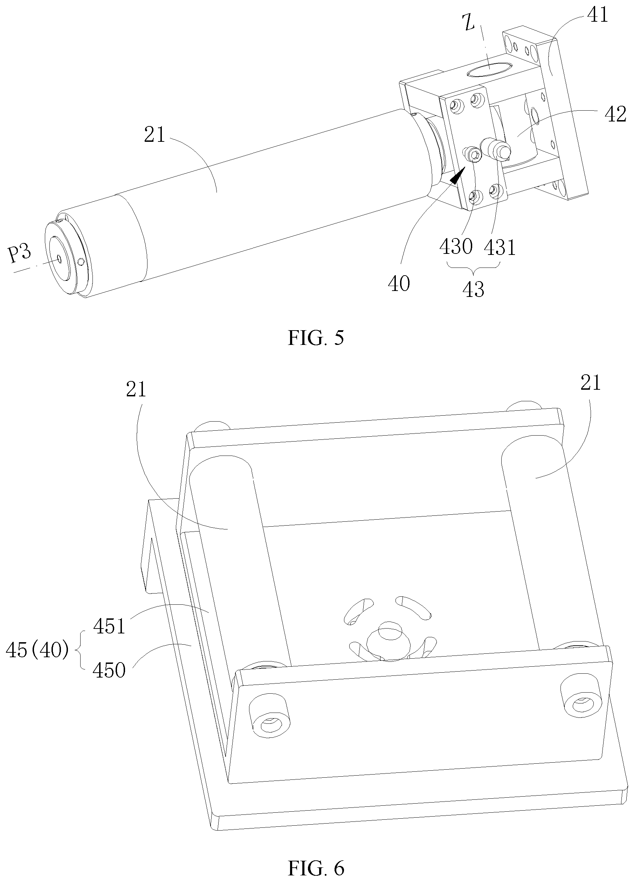

Referring to FIG. 4 and FIG. 5, FIG. 5 is a schematic diagram of an assembly structure of an adjustment mechanism 40 and an offset roller 21 according to an embodiment of the present application. In some embodiments, the adjustment mechanism 40 includes a mounting seat 41 and a rotating shaft 42, the mounting seat 41 is fixed on the back plate 30, the rotating shaft 42 is rotatably disposed on the mounting seat 41, the offset roller 21 is fixedly connected to the rotating shaft 42, the offset roller 21 can swing relative to the mounting seat 41 through the rotating shaft 42, and the axial direction of the offset roller 21 is substantially perpendicular to an axial direction of the rotating shaft 42. The axial direction of the offset roller 21 can be the extension direction of the central axis P3 of the offset roller 21, and the axial direction of the rotating shaft 42 can be the extension direction of the central axis Z of the rotating shaft 42.

Specifically, the mounting seat 41 can be a sturdy structure, which can be made of metal or alloy material to ensure sufficient stability and strength, and can be fixed on the back plate 30 through bolts or other fastening methods. The shape of the mounting seat 41 can be set according to needs, for example, it can be in a combined shape or spherical shape.

The rotating shaft 42 is a rotating component in the adjustment mechanism 40, mounted on the mounting seat 41. The rotating shaft 42 can allow the offset roller 21 to be fixedly connected, so that the offset roller 21 can rotate around the axis to adjust and control the position and angle of the offset roller 21.

Through the provision of the rotating shaft 42, the offset roller 21 can achieve swinging relative to the mounting seat 41, thereby offsetting the first electrode sheet 201 and/or the second electrode sheet 202 from each other along the width direction W1 of the first electrode sheet 201.

Specifically, through the provision of the rotating shaft 42, the offset roller 21 can achieve swinging relative to the mounting seat 41, thereby offsetting the first electrode sheets 201 from each other along the width direction W1 of the first electrode sheet 201, or offsetting the second electrode sheets 202 from each other along the width direction W1 of the first electrode sheet 201, or offsetting the first electrode sheet 201 and the second electrode sheet 202 from each other along the width direction W1 of the first electrode sheet 201.

In this way, through the combination of the rotating shaft 42 and the mounting seat 41, the offset roller 21 can swing relative to the mounting seat 41. Such a design makes the offset adjustment of the offset roller 21 more flexible. The mounting seat 41 is fixed on the back plate 30, and the back plate 30 provides stable support for the mounting seat 41, which helps to ensure the stability and reliability of the adjustment mechanism 40 and the offset roller 21. The axial direction of the offset roller 21 being substantially perpendicular to the axial direction of the rotating shaft 42 enables the offset roller 21 to swing in the vertical direction. Such a design can achieve vertical offset of the electrode sheets 200, ensuring the consistency of the position and size of the electrode sheets 200, and improving the assembly accuracy and consistency of the battery cells.

Referring to FIG. 6, FIG. 6 is a schematic diagram of an assembly structure of an adjustment mechanism 40 and an offset roller 21 according to an embodiment of the present application. In other embodiments, the adjustment mechanism 40 can include a support seat 45, the support seat 45 is mounted on the back plate 30, the support seat 45 can include a body 450 and a support frame 451 rotatably connected to the body 450, the body 450 can be connected to the back plate 30, multiple offset rollers 21 can be mounted on the support frame 451, and the offset roller 21 can rotate relative to the support frame 451. The support frame 451 and the body 450 can be rotatably connected through a rotating shaft, a rotating disk, or the like.

Referring to FIG. 5, in some embodiments, the adjustment mechanism 40 includes an adjustment assembly 43 mounted on the mounting seat 41, and the adjustment assembly 43 is connected to the offset roller 21 and configured to adjust the swing angle of the offset roller 21 relative to the mounting seat 41.

Specifically, the adjustment assembly 43 is an important component in the adjustment mechanism 40, which can connect the offset roller 21 through bolts or other methods, and control the swing angle of the offset roller 21 by adjusting its position.

In this way, the adjustment assembly 43 is mounted on the mounting seat 41, and the mounting seat 41 provides stable support for the adjustment assembly 43, which helps to ensure the stability and reliability of the adjustment mechanism 40 and the offset roller 21. By connecting the adjustment assembly 43 with the offset roller 21, the swing angle of the offset roller 21 relative to the mounting seat 41 can be adjusted.

In some embodiments, the adjustment assembly 43 can be designed with a sliding structure, slidably mounted on the mounting seat 41, and the position of the offset roller 21 is adjusted by sliding, thereby achieving adjustment of the swing angle.

In some embodiments, the adjustment assembly 43 can be designed with a gear transmission structure, and through the transmission of the gear, the offset roller 21 swings relative to the mounting seat 41, achieving adjustment of the swing angle.

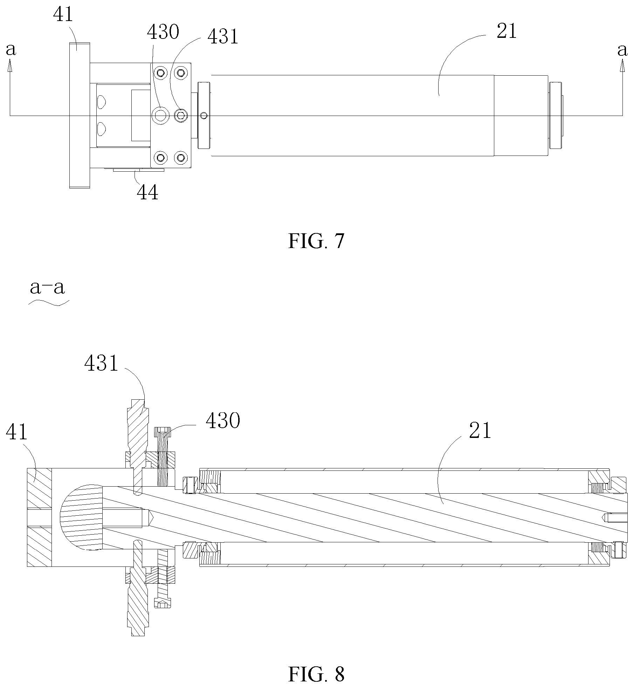

Referring to FIG. 7 and FIG. 8, FIG. 7 is a schematic diagram of an assembly structure of an adjustment mechanism 40 and an offset roller 21 according to an embodiment of the present application, and FIG. 8 is a cross-sectional view taken along a-a direction of an assembly structure of FIG. 7. In some embodiments, the adjustment assembly 43 includes a first adjustment member 430 and a second adjustment member 431, both the first adjustment member 430 and the second adjustment member 431 are mounted on the mounting seat 41 and abut against the offset roller 21, and both the first adjustment member 430 and the second adjustment member 431 drive the offset roller 21 to swing relative to the mounting seat 41 during the rotation relative to the mounting seat 41.

Specifically, the first adjustment member 430 is a part of the adjustment assembly 43, and the first adjustment member 430 can roughly adjust the position of the offset roller 21. The first adjustment member 430 can be a locking screw, an adjustment screw, or the like. The locking screw is a screw that can adjust its length by rotation and can be used for locking. In the adjustment assembly 43, the locking screw is connected to the offset roller 21, and by rotating the locking screw, the position of the offset roller 21 can be adjusted to achieve rough offset adjustment. The adjustment process of the locking screw is simple and quick, suitable for offset adjustment in a relatively large range.

The second adjustment member 431 is another part of the adjustment assembly 43, and the adjustment precision of the second adjustment member 431 is higher than that of the first adjustment member 430. After the first adjustment member 430 adjusts the position of the offset roller 21, the second adjustment member 431 further adjusts the position of the offset roller 21 during the rotation relative to the mounting seat 41 to achieve a more precise swing angle. The second adjustment member 431 can be a micrometer, which achieves adjustment through the rotation of the spiral thread. The micrometer has relatively high measurement accuracy and is suitable for situations requiring high-precision offset adjustment. In the adjustment assembly 43, the micrometer is connected to the offset roller 21, and by rotating the micrometer, the position of the offset roller 21 can be fine-tuned to achieve more precise offset angle control.

In some embodiments, the first adjustment member 430 can be a sliding block, and the position of the offset roller 21 is adjusted based on the position of the sliding block on the adjustment assembly 43.

In some embodiments, the second adjustment member 431 can be a spiral adjustment rod, and the offset roller 21 is connected through the spiral adjustment rod to achieve precise offset adjustment.

In this way, both the first adjustment member 430 and the second adjustment member 431 are mounted on the mounting seat 41 and abut against the offset roller 21, providing a stable support structure 310, which helps to ensure the stability and reliability of the adjustment mechanism 40 and the offset roller 21. Through the combination of the first adjustment member 430 and the second adjustment member 431, precise adjustment of the swing angle of the offset roller 21 relative to the mounting seat 41 can be achieved. The first adjustment member 430 provides rough adjustment, while the second adjustment member 431 provides finer adjustment, making the offset angle adjustment of the offset roller 21 more precise.

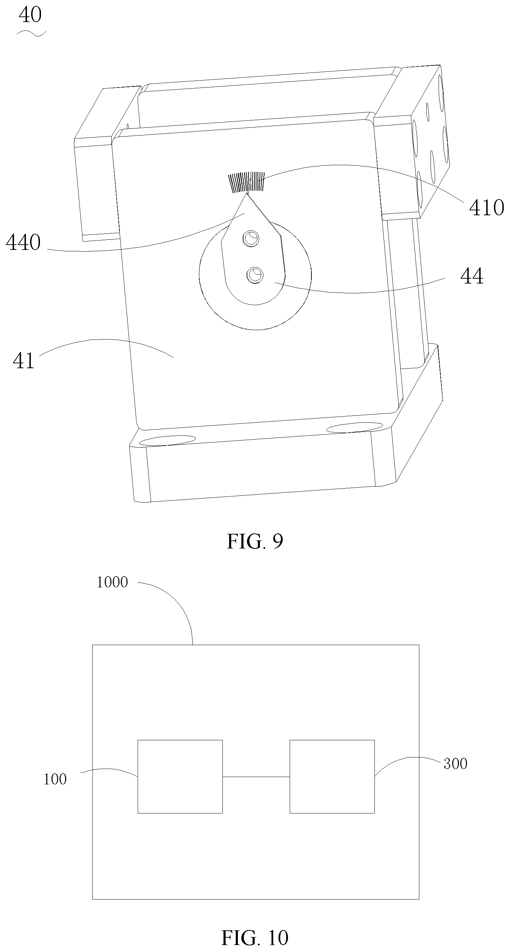

Referring to FIG. 7 and FIG. 9, FIG. 9 is a schematic structural diagram of an adjustment mechanism 40 according to an embodiment of the present application. In some embodiments, the adjustment mechanism 40 further includes an indication member 44 connected to the rotating shaft 42, and the indication member 44 is configured to indicate the swing angle of the offset roller 21.

Specifically, the indication member 44 can be a pointer 440, or other suitable means such as a digital display screen or an indicator light, and the specific form can be selected according to actual needs. During the rotation of the rotating shaft 42, the indication member 44 can be driven to move, so that the indication member 44 can indicate the swing angle of the offset roller 21.

In this way, the indication member 44 provides intuitive angle indication, which helps to provide real-time feedback on the swing angle of the offset roller 21, thereby intuitively reflecting the offset situation of the offset roller 21 relative to the mounting seat 41, and helping to precisely adjust the swing angle of the offset roller 21.

Referring to FIG. 9, in some embodiments, the indication member 44 includes a pointer 440, a scale 410 is provided on the mounting seat 41, and the pointer 440 points to the scale 410 to indicate the swing angle of the offset roller 21.

Specifically, the indication original component can be fixed on the mounting seat 41, a corresponding region on the mounting seat 41 can be provided with a scale 410, and the scale 410 can be a ruler on the mounting seat 41 for indicating the swing angle of the offset roller 21. The scale 410 can be a linear scale 410 or an angular scale 410, designed according to the range and precision of the swing angle. The pointer 440 is the movable part of the indication member 44, which is connected to the offset roller 21. When the offset roller 21 undergoes swing adjustment, the pointer 440 moves accordingly, pointing to the corresponding position on the scale 410, thereby indicating the current offset angle.

In this way, through the combination of the pointer 440 and the scale 410, the swing angle of the offset roller 21 can be intuitively reflected without complicated measurement, which is easier to operate, thereby reducing debugging time and improving operation efficiency. In addition, the pointer 440 pointing to the scale 410 provides specific angle values, and the swing angle of the offset roller 21 can be accurately adjusted, thereby achieving precise offset of the electrode sheets 200.

In other embodiments, the indication member 44 can be a digital indication member, the digital indication member refers to a component that performs indicating through a display screen, and the digital indication member can more intuitively reflect the swing angle of the offset roller 21.

Referring to FIG. 2, in some embodiments, the first conveying roller group 12 and the second conveying roller group 13 are symmetrically arranged with respect to a conveying direction H of the electrode sheet 200.

Specifically, the first electrode sheet 201 and the second electrode sheet 202 can be conveyed transversely. The first conveying roller group 12 and the second conveying roller 130 can be arranged longitudinally on both sides of the conveying direction of the first electrode sheet 201 and the second electrode sheet 202 respectively, forming a symmetrical structure.

In this way, due to the symmetrical arrangement of the first conveying roller group 12 and the second conveying roller group 13, the force distribution on the electrode sheet 200 during the conveying process is more uniform, reducing friction and squeezing between the electrode sheets 200, which helps to reduce damage and contamination on the surface of the electrode sheets 200, and improve the quality and performance of the battery cells.

Referring to FIG. 1 and FIG. 3, in some embodiments, the conveying apparatus 100 includes a cutting assembly 50, and the cutting assembly 50 is provided upstream of the conveying roller group 10 and configured to cut an original electrode sheet 200 to form multiple electrode sheets 200.

Specifically, the cutting principle of the cutting assembly 50 can be mechanical cutting, laser cutting, plasma cutting, or the like. The original electrode sheet 200 can be a large-area electrode material, and when the original electrode sheet 200 passes through the cutting assembly 50, the laser cutting system cuts the original electrode sheet 200 into multiple smaller electrode sheets 200 according to a preset cutting pattern. In this way, multiple smaller electrode sheets 200 can be obtained from one original electrode sheet 200, thereby improving the yield and efficiency of battery production.

In this way, through the automatic cutting function of the cutting assembly 50, the original electrode sheet 200 can be quickly cut into multiple electrode sheets 200, improving production efficiency and yield. The cutting assembly 50 can achieve precise cutting operations, ensuring consistent size of each cut electrode sheet 200, and guaranteeing the consistency and stability of the battery.

Referring to FIG. 10, FIG. 10 is a simplified structural diagram of a winding device 1000 according to an embodiment of the present application. The winding device 1000 of the embodiments of the present application includes the conveying apparatus 100 as described in any one of the above embodiments. The conveying apparatus 100 is configured to convey the electrode sheets 200 of the battery cell to the winding position.

Specifically, the winding device 1000 refers to a device used for winding the electrode sheets 200 of the battery cell and winding them into a preset shape. The winding device 1000 includes a winding needle 300, and the winding needle 300 is configured to wind the electrode sheets 200 conveyed by the conveying equipment.

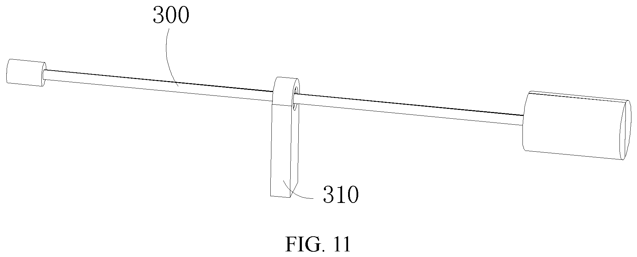

Referring to FIG. 11, FIG. 11 is a schematic diagram of an assembly structure of a winding needle 300 and a support structure 310 according to an embodiment of the present application. The winding needle 300 passes through the support structure 310, and the support structure 310 can be a structure used for mounting and supporting the winding needle 300, so that the winding needle 300 can be stable during the winding process, thereby reducing the probability of bending deformation of the winding needle 300, and thus prolonging the service life of the winding needle 300. However, the provision of the support structure 310 requires the use of the cutting assembly 50 to cut the electrode sheet 200 to avoid the support structure 310, so as to reduce the probability of interference between the support structure 310 and the electrode sheet 200, and improve the performance and quality of the battery cell.

In this way, through the above conveying apparatus 100, the winding device 1000 has multiple different functions and features, and the winding device 1000 can achieve different operations such as conveyance, segmentation, and offset of the electrode sheets 200. The winding device 1000 can achieve automated conveyance and segmentation of the electrode sheets 200, thereby improving production efficiency and reducing production costs. Through the functions of the winding device 1000, precise processing and assembly of the electrode sheets 200 are facilitated, which helps to optimize the quality and performance of the battery cells.

Referring to FIG. 1, in a specific embodiment, the conveying apparatus 100 includes a conveying roller 11 and a cutting assembly 50, and the conveying roller 11 is configured to convey the positive electrode sheet and the negative electrode sheet from the supply region to the subsequent process region. The cutting assembly 50 is provided upstream of the conveying roller group 10 and configured to cut the original electrode sheet into multiple electrode sheets 200. Through the action of the cutting assembly 50, the original electrode sheet is cut into multiple electrode sheets 200 of a predetermined size, providing preparation for the subsequent winding and conveying process.

An offset roller 21 can be provided downstream of the conveying roller 11, and by adjusting the tilting direction of the offset roller 21, fine adjustment of the position of the electrode sheet 200 is achieved, ensuring accurate alignment of the electrode sheet 200 during the conveying process. Further, the adjustment mechanism 40 achieves connection with the first electrode sheet 201 and the second electrode sheet 202 by adjusting the axial direction of the offset roller 21, and offsets them from each other along the width direction, to achieve reasonable arrangement of multiple electrode sheets 200.

The first offset roller 210 and the second offset roller 211 are introduced, connected to the first electrode sheet 201 and the second electrode sheet 202 respectively, and by adjusting the included angles between the first offset roller 210 and the second offset roller 211 and the first conveying roller 120 and the second conveying roller 130, fine adjustment of the electrode sheet 200 during the conveying process is achieved, ensuring the integrity of the electrode sheet 200. The tilting directions T2 of the first offset roller 210 and the second offset roller 211 can be set to be opposite, ensuring the stability of the relative position of the electrode sheet 200 during the conveying process. The first conveying roller group 12 and the second conveying roller group 13 are symmetrically arranged with respect to the conveying direction H of the electrode sheet 200, and through the symmetrical arrangement, the stability and balance of the electrode sheet 200 during the conveying process are ensured.

Further, multiple first conveying rollers 120 and multiple first offset rollers 210 may be provided, and along the conveying direction of the first electrode sheet 201, at least one first offset roller 210 is provided between two adjacent first conveying rollers 120, to increase the throughput of the production of the electrode sheet 200.

Similarly, multiple second conveying rollers 130 and multiple second offset rollers 211 may be provided, and along the conveying direction of the second electrode sheet 202, at least one second offset roller 211 is provided between two adjacent second conveying rollers 130, to increase the throughput of the production of the electrode sheet 200.

Further, in the conveying direction of the first electrode sheet 201, one first offset roller 210 is provided between two adjacent first conveying rollers 120, or all the first offset rollers 210 are provided between two adjacent first offset rollers 210, to further optimize the conveying and offset process of the electrode sheet 200.

Further, multiple first conveying rollers 120 are provided at the same height, multiple first offset rollers 210 are provided at the same height, and the first offset roller 210 is higher than the first conveying roller 120, while the second conveying roller 130 is provided at the same height, multiple second offset rollers 211 are provided at the same height, and the second offset roller 211 is lower than the second conveying roller 130, thereby achieving height differences of the electrode sheet 200 during the conveying process, and further arranging the electrode sheet 200 during the conveying process.

Further, referring to FIG. 4 and FIG. 5, a back plate 30 and an adjustment mechanism 40 are mounted on the conveying apparatus 100, the offset roller 21 is mounted on the adjustment mechanism 40, and the adjustment mechanism 40 is configured to adjust the axial direction of the offset roller 21, to achieve connection with the electrode sheet 200 and offset of the electrode sheet 200 along the width direction.

Further, the adjustment mechanism 40 includes a mounting seat 41 and a rotating shaft 42, the mounting seat 41 is fixed on the back plate 30, the rotating shaft 42 is rotatably disposed on the mounting seat 41, the offset roller 21 is fixedly connected to the rotating shaft 42, through the rotation of the rotating shaft 42, the offset roller 21 swings relative to the mounting seat 41, and the axial direction of the offset roller 21 is substantially perpendicular to the axial direction of the rotating shaft 42, further optimizing the adjustment process of the electrode sheet 200.

The adjustment mechanism 40 further includes an adjustment assembly 43, a first adjustment member 430, and a second adjustment member 431 mounted on the mounting seat 41, the adjustment assembly 43 is connected to the offset roller 21 and configured to adjust a swing angle of the offset roller 21 relative to the mounting seat 41, and through the operation of the adjustment assembly 43, fine adjustment of the position of the offset roller 21 is achieved; both the first adjustment member 430 and the second adjustment member 431 are mounted on the mounting seat 41 and abut against the offset roller 21, both the first adjustment member 430 and the second adjustment member 431 drive the offset roller 21 to swing relative to the mounting seat 41 during the rotation relative to the mounting seat 41, and through the coordinated adjustment of the first adjustment member 430 and the second adjustment member 431, more refined control of the position of the offset roller 21 is achieved.

Referring to FIG. 9, the indication member 44 includes a pointer 440, a scale 410 is provided on the mounting seat 41, and the pointer 440 points to the scale 410 to indicate the swing angle of the offset roller 21. Through the reading of the indication member 44, the angle of the offset roller 21 can be intuitively reflected, thereby enabling more precise adjustment.

Finally, referring to FIG. 10, through the conveying apparatus 100, the cut electrode sheets 200 are conveyed to the winding needle 300 of the winding device 1000, to achieve winding forming of the electrode assembly of the battery cell.

In the description of this specification, descriptions referring to the terms "one embodiment", "some embodiments", "exemplary embodiment", "example", "specific example", or "some examples" mean that specific features, structures, materials, or characteristics described in connection with the embodiment or example are included in at least one embodiment or example of the present application. In this specification, schematic representations of the above terms do not necessarily refer to the same embodiment or example. Moreover, the described specific features, structures, materials, or characteristics can be combined in any one or more embodiments or examples in a suitable manner.

Although the embodiments of the present application have been shown and described, those of ordinary skill in the art can understand that: various changes, modifications, alterations, and variations can be made to these embodiments without departing from the principles and spirit of the present application, and the scope of the present application is defined by the claims and their equivalents.

## Claims

1. A conveying apparatus for conveying multiple electrode sheets formed by cutting, wherein the conveying apparatus comprises:
multiple conveying roller groups, the conveying roller group comprising at least one conveying roller, and each of the conveying rollers being configured to convey one of the electrode sheets; and
an offset mechanism, the offset mechanism being configured to connect with at least one of the electrode sheets, and along a width direction of the electrode sheet, the offset mechanism being configured to offset two adjacent electrode sheets from each other.

2. The conveying apparatus according to claim 1, wherein two electrode sheets and two conveying roller groups are provided, the two electrode sheets are a first electrode sheet and a second electrode sheet respectively, the two conveying roller groups are a first conveying roller group and a second conveying roller group, the first conveying roller group comprises at least one first conveying roller, the first conveying roller is configured to convey the first electrode sheet, the second conveying roller group comprises at least one second conveying roller, and the second conveying roller is configured to convey the second electrode sheet; and
the offset mechanism is configured to connect with the first electrode sheet and/or the second electrode sheet, and along a width direction of the first electrode sheet, the offset mechanism is configured to offset the first electrode sheet and the second electrode sheet from each other.

3. The conveying apparatus according to claim 2, wherein the offset mechanism comprises at least one offset roller, the offset roller being connected to the first electrode sheet and/or the second electrode sheet, and an axial direction of the offset roller forming an included angle with an axial direction of the first conveying roller and/or the second conveying roller, so as to offset the first electrode sheet and the second electrode sheet from each other along the width direction of the first electrode sheet.

4. The conveying apparatus according to claim 3, wherein the offset roller comprises a first offset roller and a second offset roller, the first offset roller is connected to the first electrode sheet, an axial direction of the first offset roller forms a first included angle with the axial direction of the first conveying roller, and the first offset roller cooperates with the first conveying roller to convey the first electrode sheet; and
the second offset roller is connected to the second electrode sheet, an axial direction of the second offset roller forms a second included angle with the axial direction of the second conveying roller, and the second offset roller cooperates with the second conveying roller to convey the second electrode sheet.

5. The conveying apparatus according to claim 4, wherein a tilting direction of the first offset roller and a tilting direction of the second offset roller are opposite.

6. The conveying apparatus according to claim 4, wherein multiple first conveying rollers and multiple first offset rollers are provided, and along a conveying direction of the first electrode sheet, at least one first offset roller is provided between two adjacent first conveying rollers.

7. The conveying apparatus according to claim 6, wherein along the conveying direction of the first electrode sheet, one first offset roller is provided between two adjacent first conveying rollers; or,
along the conveying direction of the first electrode sheet, all the first offset rollers are provided between two adjacent first conveying rollers.

8. The conveying apparatus according to any one of claims 4 to 7, wherein multiple second conveying rollers and multiple second offset rollers are provided, and along a conveying direction of the second electrode sheet, at least one second offset roller is provided between two adjacent second conveying rollers.

9. The conveying apparatus according to claim 8, wherein along the conveying direction of the second electrode sheet, one second offset roller is provided between two adjacent second conveying rollers; or,
along the conveying direction of the second electrode sheet, all the second offset rollers are provided between two adjacent second conveying rollers.

10. The conveying apparatus according to any one of claims 4 to 9, wherein multiple first conveying rollers and multiple first offset rollers are provided, all the first offset rollers are at a same height, all the first conveying rollers are at a same height, and the height of the first offset roller is higher than the height of the first conveying roller; and/or,
multiple second conveying rollers and multiple second offset rollers are provided, all the second offset rollers are at a same height, all the second conveying rollers are at a same height, and the second offset roller is lower than the second conveying roller.

11. The conveying apparatus according to any one of claims 3 to 10, wherein the conveying apparatus comprises a back plate and an adjustment mechanism, the adjustment mechanism and the conveying roller group are both mounted on the back plate, the offset roller is mounted on the adjustment mechanism, and the adjustment mechanism is configured to adjust the axial direction of the offset roller.

12. The conveying apparatus according to claim 11, wherein the adjustment mechanism comprises a mounting seat and a rotating shaft, the mounting seat is fixed on the back plate, the rotating shaft is rotatably disposed on the mounting seat, the offset roller is fixedly connected to the rotating shaft, the offset roller is capable of swinging relative to the mounting seat through the rotating shaft, and the axial direction of the offset roller is substantially perpendicular to an axial direction of the rotating shaft.

13. The conveying apparatus according to claim 12, wherein the adjustment mechanism comprises an adjustment assembly mounted on the mounting seat, and the adjustment assembly is connected to the offset roller and configured to adjust a swing angle of the offset roller relative to the mounting seat.

14. The conveying apparatus according to claim 13, wherein the adjustment assembly comprises a first adjustment member and a second adjustment member, both the first adjustment member and the second adjustment member are mounted on the mounting seat and abut against the offset roller, and both the first adjustment member and the second adjustment member drive the offset roller to swing relative to the mounting seat during the rotation relative to the mounting seat.

15. The conveying apparatus according to any one of claims 12 to 14, wherein the adjustment mechanism further comprises an indication member connected to the rotating shaft, the indication member being configured to indicate a swing angle of the offset roller.

16. The conveying apparatus according to claim 15, wherein the indication member comprises a pointer, a scale being provided on the mounting seat, and the pointer pointing to the scale to indicate the swing angle of the offset roller.

17. The conveying apparatus according to any one of claims 2 to 16, wherein the first conveying roller group and the second conveying roller group are symmetrically arranged with respect to the conveying direction of the electrode sheet.

18. The conveying apparatus according to any one of claims 1 to 17, wherein the conveying apparatus comprises a cutting assembly, the cutting assembly being provided upstream of the conveying roller group and configured to cut an original electrode sheet to form the multiple electrode sheets.

19. A winding device, comprising the conveying apparatus according to any one of claims 1 to 18.
